(19) Europäisches Patentamt

European Patent Office

Office européen des brevets

(11) Publication number: **0 447 049 A1**

(12) **EUROPEAN PATENT APPLICATION**

(21) Application number: **91301447.8**

(22) Date of filing: **22.02.91**

(51) Int. Cl.⁵: **B64G 1/44, B64G 1/58**

(30) Priority: **28.02.90 GB 9004435**

(43) Date of publication of application:
**18.09.91 Bulletin 91/38**

(84) Designated Contracting States:
**DE FR GB NL**

(71) Applicant: **GEC-MARCONI LIMITED**
**The Grove, Warren Lane**
**Stanmore, Middlesex HA7 4LY (GB)**

(72) Inventor: **Banfield, Lyndon**
**1 Kiln Road**
**Fareham, Hampshire, PO16 7UA (GB)**

(74) Representative: **Cockayne, Gillian et al**
**The General Electric Company plc Central**
**Patent Dept. (Chelmsford Office) Marconi**
**Research Centre West Hanningfield Road**
**Great Baddow, Chelmsford Essex CM2 8HN**
**(GB)**

(54) **Geostationary satellite.**

(57) The invention concerns a satellite (1) for placing in a 3 - axis geostationary orbit and having a pair of solar panels (2,3) extending therefrom, the planes of the panels lying parallel to the axis of rotation of the satellite when in orbit. The invention is characterised by the solar panels being offset with regard to said axis of rotation so as to provide masking from the sun's rays for the faces of the satellite on which the panels are mounted.

EP 0 447 049 A1

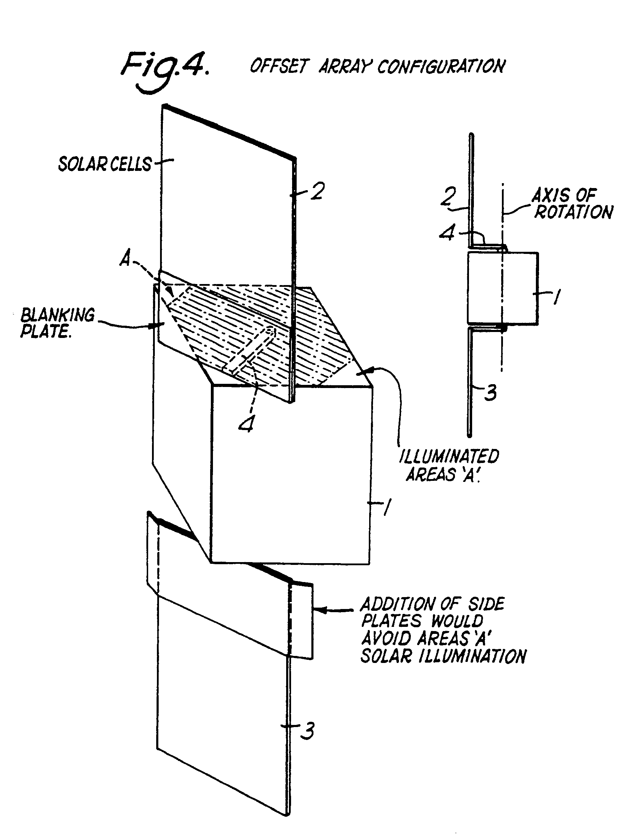

*Fig.4.* OFFSET ARRAY CONFIGURATION

SOLAR CELLS

2

A

BLANKING PLATE.

4

AXIS OF ROTATION

2

4

1

3

ILLUMINATED AREAS 'A'.

1

ADDITION OF SIDE PLATES WOULD AVOID AREAS 'A' SOLAR ILLUMINATION

3

## GEOSTATIONARY SATELLITE

The present invention concerns geostationary satellites. The standard configuration for the solar array mounting on a three axis stablised geostationary satellite exposes the main heat radiating surfaces of such a satellite to seasonal solar illumination, with detrimental effects on satellite heat dissipation capabilities, equipment temperature ranges and satellite reliability. The present invention is concerned with providing a more stable and benign thermal environment for the satellite together with increased satellite heat dissipation capability. This should result in improved equipment reliability as maximum spacecraft reliability is achieved with the minimum variation of equipment temperature from ambient room temperature.

Accordingly the present invention consists in a satellite for placing in a 3 - axis geostationary orbit and having a pair of solar panels extending therefrom, the solar panels being offset with regard to the axis of rotation of the satellite when in orbit so as to provide masking from the sun's rays for the faces of the satellite on which the panels are mounted.

Preferably each solar panel is provided with a blanking plate. Furthermore each blanking plate may have side plates to increase the protection afforded to the satellite.

In order that the present invention may be more readily understood, a prior art embodiment and an exemplary embodiment of the invention will now be described with reference to the accompanying drawings, in which:-

Figure 1 is a perspective view of a standard satellite configuration,

Figure 2 shows side and plan elevations of the satellite of Figure 1,

Figure 3 shows graphs giving levels of solar illumination with the satellite of Figure 1,

Figure 4 shows an embodiment satellite according to the present invention,

Figure 5 shows a table giving thermal performance for a satellite of the type shown in Figure 1, and

Figure 6 shows a table giving the thermal performance for an embodiment of a satellite of the type shown in Figure 4.

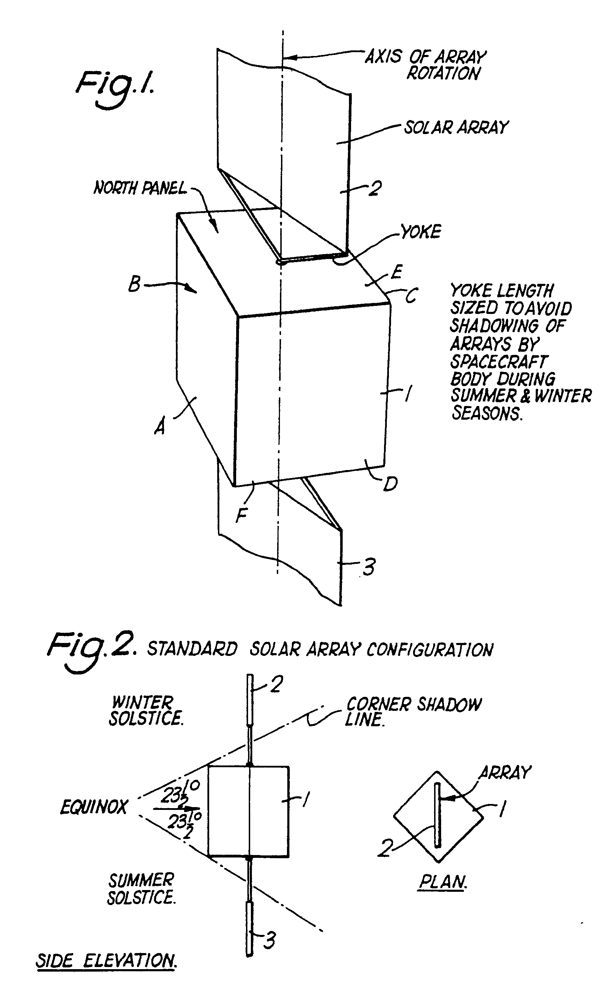

Referring now to Figure 1 of the drawings a satellite is shown at 1, the satellite carrying a pair of solar panels 2 and 3. As can be seen from the plan view of Figure 2 the solar panels are mounted with their mounting axes coaxial with the axis of rotation of the satellite. The satellite shown in these figures is of the type known as a 3 - axis stabilised geostationary satellite. Because of the geostationary nature of the satellite is is a relatively simple matter to predict the major thermal implications of the illustrated configuration. These can be summarised as:

Firstly the earth, anti-earth, East and West faces all experience a half sinusoidal solar heat input peaking at nearly 1 solar constant, for 12 hours in every 24 hours practically throughout the year. Thermal stability of these faces is very poor. Thus in order to minimise the variable solar heating effect, thermal insulation is needed on these faces. Such insulated surfaces are unsuitable for spacecraft thermal control.

At the same time the North and South panels experience anti- phase half sinusoidal solar heating, peaking at approximately 0.4 solar constant, for 6 months in every 12 months, as a result of the tilt of the earth. These two surfaces are used as the major thermal control areas on the spacecraft.

In order to minimise solar heating effects optical solar reflectors are used in this configuration. These reflectors tend to degrade with time in the space environment, are expensive and relatively difficult to handle.

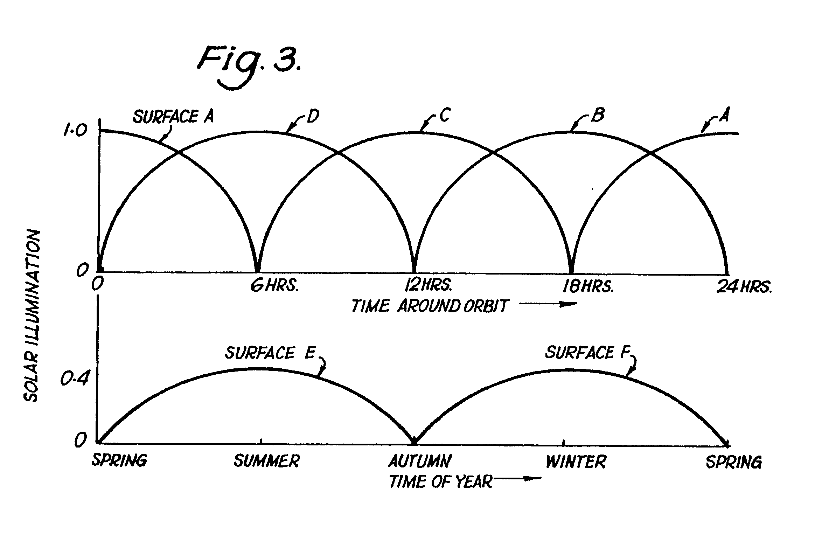

These thermal cycles are illustrated in the graphs of Figure 3 where the six faces of the satellite as shown in Figure 1 have been respectively numbered A, B, C, D,E and F with the corresponding curves on the graph having been identified in the same way.

Referring now to Figure 4 of the drawings, this shows a satellite having a configuration according to the present invention. It can be seen that in this embodiment the solar panels 2 and 3 are offset with respect to the axis of rotation of the satellite. Thus each of the solar panels is mounted on a cranked arm 4 so that the North and South faces of the satellite are always shadowed by the solar panels. Each of the panels 2, 3 is divided into two areas, namely an area 5 carrying solar cells for powering the satellite, and an area 6 which consists of a blanking plate. It can be seen from Figure 4 that the upper solar panel still leaves small areas A' which are exposed to solar illumination. The lower panel 3 shows how even this small amount of solar illumination can be avoided by the addition of suitable side plates 7.

The configuration of Figure 4 has a number of advantages when compared to the standard configuration of Figure 1.

Thus the major thermal advantages of the Figure 4 array are firstly minimal seasonal effects on either North or South faces of the satellite. Secondly the eclipse entry temperatures are much higher. Also there may be no need for optical solar reflectors (OSR) on the North and South satellite panels. This results in a cheaper satellite which is also easier to handle. In any case the surface properties of the blanking plate and the North and South surfaces can be optimised for the required thermal performance e.g. the use of O.S.Rs on the blanking plate will lower the blanking plate temperature, and therefore the North and South panel temperatures, thereby increasing the spacecraft heat rejection capability. Offsetting this gain is the increased cost of the blanking plate O.S.Rs. Many variations on thermal finishes are possible.

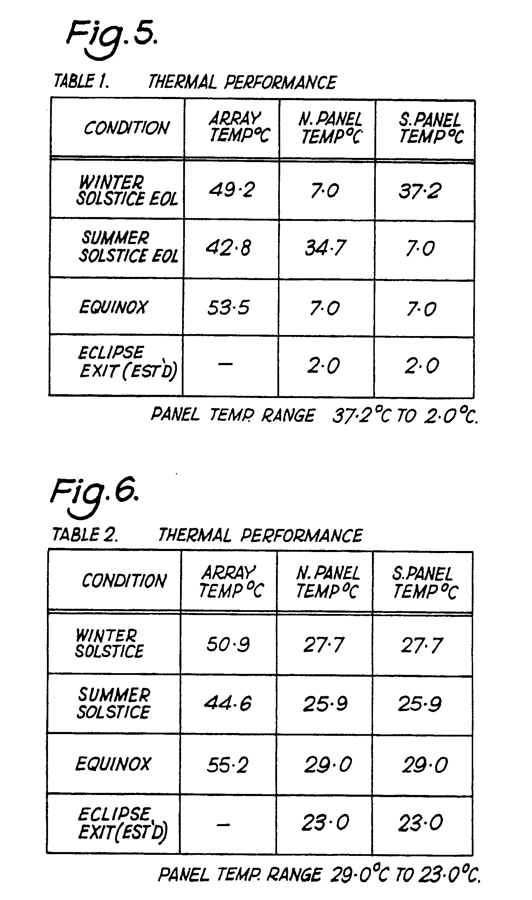

The tables shown in Figure 5 and 6 show the thermal performance of the respective embodiments of Figures 1 and 4.

## Claims

1. A satellite for placing in a 3 - axis geostationary orbit and having a pair of solar panels (2, 3) extending therefrom, the planes of the panels (2, 3) lying parallel to the axis of rotation of the satellite when in orbit, and characterised in that the solar panels (2, 3) are offset with regard to said axis of rotation so as to provide masking from the sun's rays for the faces of the satellite on which the panels are mounted.

2. A satellite as claimed in Claim 1 and characterised in that each solar panel (2, 3) is provided with a blanking plate (6).

3. A satellite as claimed in Claim 2, and further characterised in that each blanking plate may have side plates to increase the protection afforded to the satellite.

Fig.1.

AXIS OF ARRAY ROTATION

SOLAR ARRAY

2

NORTH PANEL

YOKE

B

E
C

A

YOKE LENGTH SIZED TO AVOID SHADOWING OF ARRAYS BY SPACECRAFT BODY DURING SUMMER & WINTER SEASONS.

1

D

F

3

Fig.2. STANDARD SOLAR ARRAY CONFIGURATION

2

WINTER SOLSTICE.

CORNER SHADOW LINE.

EQUINOX

$23\frac{1}{2}°$
$23\frac{1}{2}°$

1

ARRAY

2

1

PLAN.

SUMMER SOLSTICE.

3

SIDE ELEVATION.

Fig. 3.

SOLAR ILLUMINATION

SURFACE A

SURFACE E

SURFACE F

TIME AROUND ORBIT

TIME OF YEAR

6 HRS. 12 HRS. 18 HRS. 24 HRS.

SPRING SUMMER AUTUMN WINTER SPRING

1.0

0

0.4

0

A B C D

6

*Fig.4.* OFFSET ARRAY CONFIGURATION

SOLAR CELLS

2

A

BLANKING PLATE.

4

ILLUMINATED AREAS 'A'.

1

ADDITION OF SIDE PLATES WOULD AVOID AREAS 'A' SOLAR ILLUMINATION

3

2

AXIS OF ROTATION

4

1

3

# Fig.5.

TABLE 1.    THERMAL PERFORMANCE

| CONDITION | ARRAY TEMP °C | N. PANEL TEMP °C | S. PANEL TEMP °C |
|---|---|---|---|
| WINTER SOLSTICE EOL | 49·2 | 7·0 | 37·2 |
| SUMMER SOLSTICE EOL | 42·8 | 34·7 | 7·0 |
| EQUINOX | 53·5 | 7·0 | 7·0 |
| ECLIPSE EXIT (EST'D) | — | 2·0 | 2·0 |

PANEL TEMP. RANGE    37·2°C TO 2·0°C.

# Fig.6.

TABLE 2.    THERMAL PERFORMANCE

| CONDITION | ARRAY TEMP °C | N. PANEL TEMP °C | S. PANEL TEMP °C |
|---|---|---|---|
| WINTER SOLSTICE | 50·9 | 27·7 | 27·7 |
| SUMMER SOLSTICE | 44·6 | 25·9 | 25·9 |
| EQUINOX | 55·2 | 29·0 | 29·0 |
| ECLIPSE EXIT (EST'D) | — | 23·0 | 23·0 |

PANEL TEMP. RANGE 29·0°C TO 23·0°C.

**European Patent Office**

## EUROPEAN SEARCH REPORT

Application Number

EP    91 30 1447

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2550757 (ERNO RAUMFAHRTTECHNIK GMBH) <br> * page 3, line 30 - page 4, line 31; figure 2 * <br> --- | 1 | B64G1/44 <br> B64G1/58 |
| A,P | PATENT ABSTRACTS OF JAPAN <br> vol. 14, no. 319 (M-996)(4262) 09 July 1990, <br> & JP-A-2 106497 (TOSHIBA CORP.) 18 April 1990, <br> * the whole document * <br> --- | 1 | |
| A | EP-A-132768 (NEC CORP.) <br> * page 6, line 15 - page 7, line 9; figures 1-2 * <br> ----- | 1, 2 | |

**TECHNICAL FIELDS SEARCHED (Int. Cl.5)**

B64G

The present search report has been drawn up for all claims

| Place of search | Date of completion of the search | Examiner |
|---|---|---|
| THE HAGUE | 24 MAY 1991 | RIVERO C.G. |

EPO FORM 1503 03.82 (P0401)